# EUROPEAN PATENT APPLICATION

(11) **EP 3 892 573 A1**
(43) Date of publication of application: **13.10.2021**
(21) Application number: 21167127.6
(22) Date of filing: 07.04.2021
(51) Int. Cl.: B65G 47/88

(54) **MAGNETIZED HOME POSITION FOR ACTUATED PART**

(30) Priority: 09.04.2020 US 202063007468 P; 05.03.2021 US 202117193074
(71) Applicant: Goodrich Corporation, Charlotte, NC 28217-4578 (US)
(72) Inventor: OTTO, Kruse, Jamestown, 58401 (US); SEUBERT, Christopher P., Jamestown, 58401 (US)
(74) Representative: Dehns

(57) **Abstract**

An actuation assembly (10) that uses a magnetic field to dispose/retain a first part (30) in a home position is disclosed. An actuation force may be exerted on the first part to move the first part (30) from a home position to an actuated position. A biasing member (40) of the actuation assembly (10) may be used to move the first part (30) from its actuated position back to its home position. The magnetic field may be used to reduce the amount of overtravel of the first part (30) as it is moved back to its home position by the biasing member (40), may be used to retain the first part (30) in this home position, and/or may be used to establish the home position.

## Description

### CROSS-REFERENCE TO RELATED APPLICATIONS

This patent application is a non-provisional patent application of, and claims the benefit of, pending U.S. Provisional Patent Application Serial No. 63/007,468, that is entitled "MAGNETIZED HOME POSITION FOR ACTUATED PART," that was filed on 09-Apr-2020.

### FIELD

The present disclosure generally relates to the field of actuated parts and, more particularly, to parts that are actuated away from a home position and that are biased back to a home position.

### BACKGROUND

A part may be disposed in a home position, and may be moved from this home position to an actuated position. Thereafter, the part may be moved back from the actuated position to the home position. Having a mechanical stop to establish the home position for the part may be disadvantageous in one or more respects.

### SUMMARY

An assembly is presented herein that utilizes a magnetic field that establishes a home position for a movable part (e.g., a first part). Both the configuration of such an assembly and the operation of such an assembly are within the scope of this Summary. As the assembly includes such a movable part that is moved away from this home position (and that may be characterized as an actuation of this movable part and as will be discussed in more detail below), the assembly may also be referred to herein as an "actuation assembly".

Various embodiments have the noted actuation assembly being for use in conjunction with a conveyor system for the transport of product or articles of any appropriate type (e.g., aircraft cargo). A first part of this actuation assembly may be a stop for this conveyor system when the first part is in a home position - such that the first part provides a mechanical stop for product/articles attempting to move in a first direction relative to the conveyor system (e.g., the home position may be characterized as a stop position or as a closed position for the first part). The first part of this actuation system may be moved to an actuated position to allow product/articles to move in a second direction relative to the conveyor system and past the first part (e.g., the actuated position may be characterized as an open position for the first part), including where the first and second directions are opposite of one another (e.g., along an axial path). Actuation of the first part to its actuated position may be provided actively (e.g., by a drive of any appropriate type that exerts a motive force on the first part). Actuation of the first part to its actuated position may also be provided passively (e.g., by a product/article on the conveyor system (and moving relative to the first part) contacting and moving the first part from its home position to its actuated position, by the product/article moving in the above-noted second direction relative to the conveyor system).

An actuation assembly may include a first part, a biasing member, and a second part. The first part may be moved between a home position and an actuated position. The biasing member may be operatively interconnected with the first part to bias the first part to its home position (e.g., to move the first part from the actuated position to/toward its home position). A magnetic field exists between the first part and the second part at least when the first part is in its home position, and is directed to bias the first part to its home position. The magnetic field establishes the home position for the first part.

The first part may move along an arcuate path proceeding between its home position and its actuated position (e.g., about a rotational axis). The first part may move along an axial path proceeding between its home position and its actuated position. Any appropriate way of actuating the first part may be utilized, for instance by interconnecting a drive of any appropriate type (e.g., a motor) with the first part, by the first part being engaged by a moving product/article (e.g., on a conveyor system), or the like.

The biasing member may be in the form of one or more springs or biasing elements. A torsion spring(s) may be used as the biasing member in the case where the first member moves along an arcuate path between its home position and its actuated position, while a compression spring(s) may be used as the biasing member in the case where the first member moves along an axial path between its home position and its actuated position.

The actuation assembly may include a magnet that is located at the home position for the first part. Various embodiments include having the second part include this magnet (e.g., a second magnet). This magnet may be maintained in a fixed position relative to the second part. The first part may include a first magnet that moves in conjunction with the first part (e.g., the first magnet may be maintained in a fixed position relative to the first part). The first magnet (first part) and the magnet (second part) may be aligned when the first part is disposed in its home position.

The first part may include a first section that is aligned with the above-noted magnet of the second part when the first part is disposed in its home position. This first section may include a material (e.g., a ferromagnetic material) that magnetically interacts with the magnet of the second part when the first part is disposed in its home position.

The biasing member may move the first part to and past the home position of the first part (e.g., an overtravel situation or condition). The magnetic field between the first part and the second part may be used to move the first part back to its home position (in the same direction that the first part moves in proceeding from its home position to its actuated position by exposure to an actuation force). The first part could oscillate for a time about its home position, but this oscillation time should be reduced by the magnetic field and which will eventually retain the first part in a stationary state at its home position. Various embodiments have an open space on each side of the home position of the first part such that the first part does not come into contact with another structure during the noted oscillation (e.g., the home position may be characterized as being located in free space). An entirety of a stopping force exerted on the first part may be provided by the magnetic field, alone or in combination with the biasing member (e.g., the biasing member may assist in stopping the first part in the case where the first part moves past the home position (while traveling in a direction that is away from the actuated position) during the noted oscillation of the first part). An entirety of the force that is exerted on the first part to retain the first part in its home position may be provided by the magnetic field.

Any feature that is addressed in this disclosure and that is intended to be limited to a "singular" context or the like will be clearly set forth herein by terms such as "only," "single," "limited to," or the like. Merely introducing a feature in accordance with commonly accepted antecedent basis practice does not limit the corresponding feature to the singular (e.g., indicating that a part includes "a magnet" alone does not mean that the part includes only a single magnet). Moreover, any failure to use phrases such as "at least one" also does not limit the corresponding feature to the singular (e.g., indicating that a part includes "a magnet" alone does not mean that the part includes only a single magnet). Use of the phrase "at least generally" or the like in relation to a particular feature encompasses the corresponding characteristic and insubstantial variations thereof (e.g., indicating that two parts are at least generally aligned encompasses the parts actually being aligned). Finally, a reference of a feature in conjunction with the phrase "in one embodiment" does not limit the use of the feature to a single embodiment.

Various aspects are also addressed by the following paragraphs and in the noted combinations:
1. An actuation assembly, comprising:
   a first part;
   a biasing member operatively interconnected with said first part;
   a second part;
   a magnetic field between said first part and said second part when said first part is in a home position, wherein said first part is actuatable from said home position to an actuated position, wherein said biasing member biases said first part to said home position, and wherein said magnetic field establishes said home position.
2. The actuation assembly of paragraph 1, wherein said first part moves along an arcuate path in proceeding between said home position and said actuated position.
3. The actuation assembly of any of paragraphs 1-2, wherein said first part comprises a rotational axis, and wherein said first part is rotatable about said rotational axis in proceeding between said home position and said actuated position.
4. The actuation assembly of any of paragraphs 1-3, wherein said biasing member comprises a first spring.
5. The actuation assembly of any of paragraphs 1-4, wherein said first spring is a torsion spring.
6. The actuation assembly of any of paragraphs 1-5, wherein a single spring biases said first part to said home position, and wherein said biasing member comprises said single spring.
7. The actuation assembly of paragraph 1, wherein said first part is axially translatable.
8. The actuation assembly of any of paragraphs 1 and 7, wherein said first part moves along an axial path in proceeding between said home position and said actuated position.
9. The actuation assembly of any of paragraphs 7-8, wherein said biasing member comprises a first spring.
10. The actuation assembly of paragraph 9, wherein said first spring is a compression spring.
11. The actuation assembly of any of paragraphs 1-10, further comprising a magnet located at said home position for said first part.
12. The actuation assembly of paragraph 11, wherein said second part comprises said magnet.
13. The actuation assembly of any of paragraphs 11-12, wherein said magnet is maintained in a fixed position relative to said second part.
14. The actuation assembly of any of paragraphs 11-13, wherein said first part comprises a first magnet that moves in conjunction with said first part, and wherein said first magnet and said magnet are aligned when said first part is disposed in said home position.
15. The actuation assembly of any of paragraphs 11-13, wherein said first part comprises a first section, wherein said first section is aligned with said magnet when said first part is disposed in said home position, and wherein said first section comprises a material that magnetically interacts with said magnet.
16. The actuation assembly of any of paragraphs 1-10, further comprising a magnetic material section, wherein one of said first part and said second part comprises said magnet and the other of said first part and said second part comprises said magnetic material section, and wherein said magnetic field exists between said magnet and said magnetic material section.
17. The actuation assembly of any of paragraphs 1-16, wherein said actuation assembly lacks a mechanical stop to establish said home position for said first part.
18. The actuation assembly of any of paragraphs 1-17, wherein said home position for said first part is exclusively provided by said magnetic field.
19. The actuation assembly of any of paragraphs 1-18, wherein said first part is a stop engageable with an article on a conveyor system when said first part is in said home position.
20. A method of controlling movement of a first part, comprising:
   executing a first moving comprising moving said first part from a home position to an actuated position;
   removing a force used for said first moving;
   exerting a biasing force on said first part;
   executing a second moving after said removing, wherein said second moving moves said first part from said actuated position back to said home position using said biasing force; and
   retaining said first part in said home position and comprising exerting a magnetic force on said first part that establishes said home position.
21. The method of paragraph 20, wherein said home position is spaced from said actuated position along an arcuate path.
22. The method of any of paragraphs 20-21, wherein said first moving comprises rotating said first part about a rotational axis.
23. The method of paragraph 20, wherein said home position is spaced from said actuated position along an axial path.
24. The method of any of paragraphs 20 and 23, wherein said first moving comprises translating said first part.
25. The method of any of paragraphs 20, 23, and 24, wherein said first moving comprises axially moving said first part.
26. The method of any of paragraphs 20-25, wherein said biasing force is exerted on said first part during at least part of said first moving.
27. The method of any of paragraphs 20-26, wherein a magnitude of said biasing force progressively increases during at least part of said first moving.
28. The method of any of paragraphs 20-27, further comprising compressing a spring during at least part of said first moving, wherein said spring provides said biasing force.
29. The method of paragraph 28, wherein said spring is selected from the group consisting of a compression spring and a torsion spring.
30. The method of any of paragraphs 20-29, wherein said retaining comprises disposing a magnet in a fixed position that corresponds with said home position for said first part.
31. The method of paragraph 30, wherein said first part comprises a first magnet that is aligned with said magnet when said first part is in said home position.
32. The method of paragraph 30, wherein said first part comprises a magnetic material section that is aligned with said magnet when said first part is in said home position.
33. The method of any of paragraphs 20-29, wherein one of said first part and a second part comprises a magnet and the other of said first part and said second part comprises a magnetic material section, wherein said magnetic force is between said magnet and said magnetic material section, and wherein said second part is retained in a stationary position.
34. The method of any of paragraphs 20-33, wherein said biasing force moves said first part to and past said home position, and wherein said magnetic force pulls said first part back to said home position.
35. The method of any of paragraphs 20-34, wherein said home position for said first part is exclusively provided by said magnetic force.
36. The method of any of paragraphs 20-35, wherein said first part is a stop engageable with an article on a conveyor system when said first part is in said home position.

### BRIEF DESCRIPTION OF THE FIGURES

Figure 1 is a perspective view of an actuation assembly that uses a pair of magnets to establish a home position for a rotating, actuated part;
Figure 2 is a perspective view of an actuation assembly that uses a single magnet to establish a home position for a rotating, actuated part;
Figure 3A is a perspective schematic of an actuation assembly that uses at least one magnet to establish a home position for a rotating, actuated part;
Figure 3B is a cross-sectional view of the actuation assembly of Figure 3A;
Figure 4A is a cross-sectional view of an actuation assembly and with a translatable, actuated part being retained in a home position by at least one magnet; and
Figure 4B is a cross-sectional view of the actuation assembly of Figure 4A, with the translatable, actuated part having been actuated away from its home position.

### DETAILED DESCRIPTION

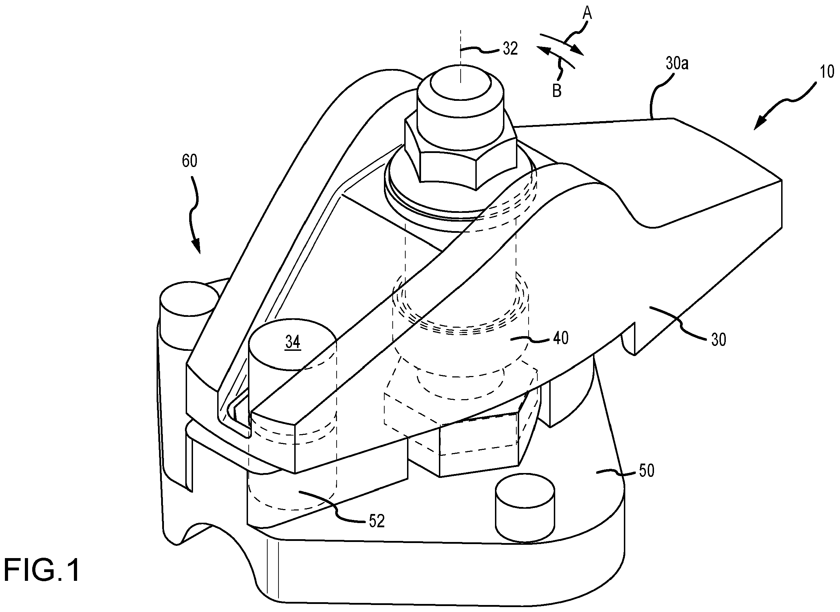

An actuation assembly is illustrated in Figure 1 and is identified by reference numeral 10. The actuation assembly 10 includes an actuatable first part 30 that is able to rotate about a rotational axis 32. An actuation force may be exerted on the first part 30 (e.g., at location 30a) to rotate the first part in one direction about its rotational axis 32 (e.g., represented by the arrow A) and away from a home position 60 of the first part 30. A biasing member 40 (e.g., a torsion spring; a spring hinge) exerts a biasing force on this same first part 30 to rotate the first part 30 in an opposite direction about the rotational axis 32 and represented by the arrow B (an opposite direction compared to the actuation force exerted on the first part 30), to move the first part 30 back toward/to its home position 60. A first magnet 34 (e.g., a permanent magnet) is appropriately mounted/secured to the first part 30. Various embodiments have the position of the first magnet 34 being fixed relative the first part 30. Various embodiments have an open space on each side of the home position 60 of the first part 30 (e.g. such that the first part 30 can move at least a certain distance in the direction of the arrow B, past its home position 60, without contacting a stop or the like).

Another component of the actuation assembly 10 is a second part 50. This second part 50 may be maintained in a stationary position, may be rotatably connected with the first part 30, or both (e.g., a shaft about which the first part 30 rotates may be rotatably supported by the second part 50). In any case, the first part 30 moves relative to the second part 50. A second magnet 52 (e.g., a permanent magnet) is appropriately mounted/secured to the second part 50. Various embodiments have the position of the second magnet 52 being fixed relative the second part 50.

Figure 1 illustrates the home position 60 for the first part 30 where the first magnet 34 is aligned with the second magnet 52 (again where the first part 30 includes the first magnet 34 and the second part 50 includes the second magnet 52). An actuation force is exerted on the first part 30 (e.g., at location 30a) to rotate the first part 30 away from this home position 60, about the rotational axis 32 and in the direction represented by the arrow A, and such that the first magnet 34 (first part 30) is no longer aligned with the second magnet 52 (second part 50). This may be referred to as an actuated position for the first part 30. This actuated movement of the first part 30 may progressively increase the biasing force of the biasing member 40. After the actuation force is removed from the first part 30, the biasing force of the biasing member 40 rotates the first part 30 about its rotational axis 32 in the opposite direction and represented by the arrow B, to move the first part 30 back toward/to the home position 60. The magnetic interaction of the first magnet 34 (first part 30) with the second magnet 52 (second part 50) reduces an amount of overtravel of the first part 30 in returning to its home position 60 (e.g., the biasing force of the biasing member 40 may move the first part 30 to and then past its home position 60 in proceeding in the direction of the arrow B, and thereafter the magnetic interaction of the first magnet 34 (first part 30) with the second magnet 52 (second part 50) will pull the first part 30 back to its home position 60 or in the direction of the arrow A). In various embodiments the entirety of the force exerted on the first part 30 to stop/restrain the first part 30 in its home position 60 may be provided by a magnetic interaction (e.g., between the first magnet 34 and the second magnet 52), and not by a mechanical stop of any type. In various embodiments, the home position 60 of the first part 30 is exclusively established by the magnetic interaction between the magnets 34, 52.

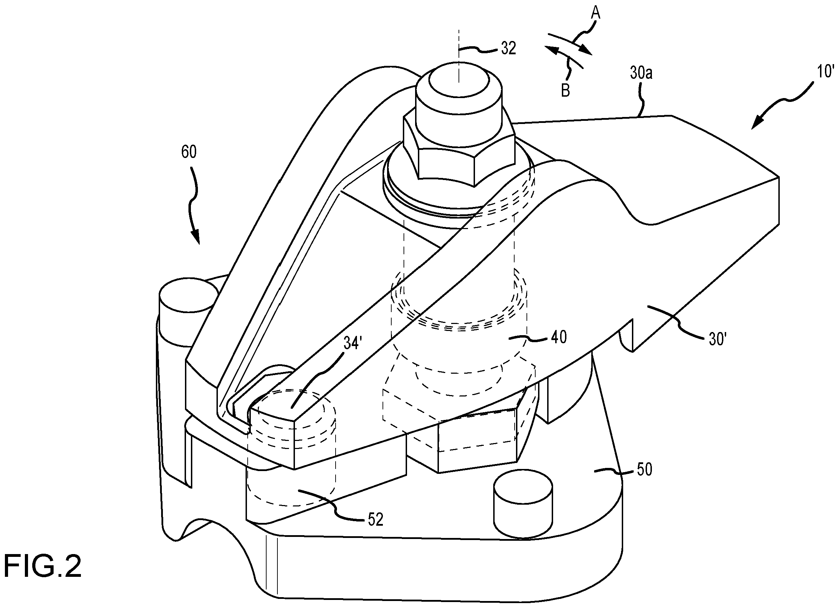

A variation of the actuator assembly 10 of Figure 1 is presented in Figure 2 and is identified by reference numeral 10'. Corresponding components between the actuation assembly 10 (Figure 1) and actuation assembly 10' (Figure 2) are identified the same reference numerals, and the discussion presented herein regarding the actuation assembly 10 remains equally applicable to the actuation assembly 10' unless otherwise noted to the contrary. Instead of the first part 30' of the actuation assembly 10' incorporating a first magnet, the first part 30' instead includes a first section 34' that is formed of a material that magnetically interacts with the second magnet 52 of the second part 50. For instance, the first section 34' may be in the form of a ferromagnetic material, ferrites or the like. Various embodiments have the position of the first section 34' being fixed relative the first part 30'. It may be desirable for the remainder of the first part 30' to be formed from a non-magnetic material or to at least have a relevant portion of the first part 30' (e.g., a portion of the first part 30', for instance the portion that progresses over the second magnet 52) be formed from a non-magnetic material. It should be appreciated that the first part 30' of the actuation assembly 10' could be configured to include a first magnet, and that the second part 50 of the actuation assembly 10' could be configured to a second section in accordance with the above-described first section 34'.

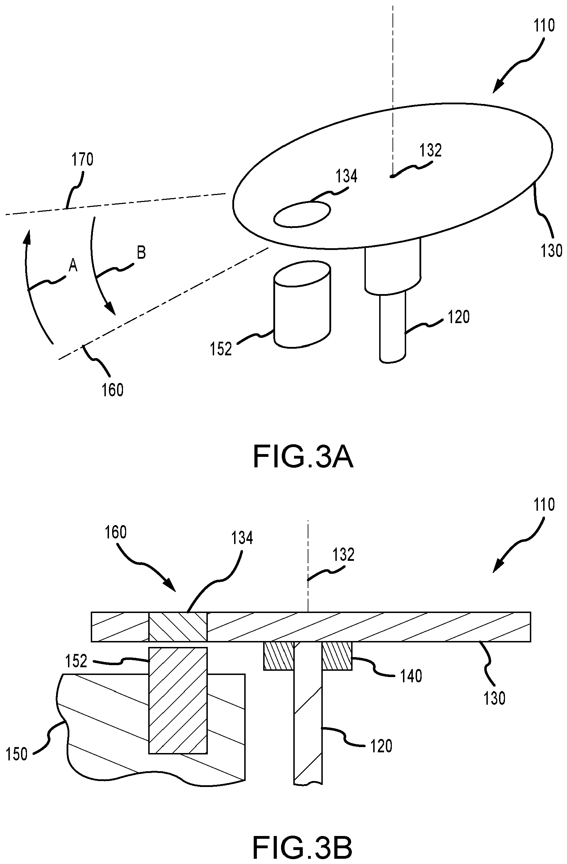

An actuation assembly is illustrated in Figures 3A and 3B and is identified by reference numeral 110. The actuation assembly 110 may include an actuator 120 (e.g., a drive or motor) that exerts an actuation force on a first part 130 to rotate the first part 130 in one direction about a rotational axis 132 (represented by arrow A in Figure 3A), from a home position 160 of the first part 130 to an actuated position 170. Other ways of exerting an actuation force on the first part 130 may be utilized. A biasing member 140 (e.g., a torsion spring; a spring hinge) exerts a biasing force on this same first part 130 to rotate the first part 130 in an opposite direction about this same rotational axis 132 and represented by arrow B in Figure 3A (an opposite direction compared to the noted actuation force), to move the first part 130 back toward/to its home position 160. A first section 134 is appropriately mounted/secured to the first part 130. This first section 134 may be in the form of a magnet (e.g., a permanent magnet) or a material that magnetically interacts with a magnet (e.g., the materials noted above in relation to the first section 34'). Various embodiments have the position of the first section 134 being fixed relative the first part 130. Various embodiments have an open space on each side of the home position 160 of the first part 130 (e.g. such that the first part 130 can move at least a certain distance in the direction of the arrow B, past its home position 160, without contacting a stop or the like).

Another component of the actuation assembly 110 is a second part 150. This second part 150 may be maintained in a stationary position, may be rotatably connected with the first part 130 (e.g., a shaft about which the first part 130 rotates may be rotatably supported by the second part 150), or both. In any case, the first part 130 moves relative to the second part 150. A second magnet 152 (e.g., a permanent magnet) is appropriately mounted/secured to the second part 150. Various embodiments have the position of the second magnet 152 being fixed relative the second part 150.

Figure 3A illustrates the home position 160 for the first part 130 where the first section 134 (first part 130) is aligned with the second magnet 152 (second part 150). An actuation force may be exerted on the first part 130 to rotate the first part 130 from its home position 160 to an actuated position 170 (spaced from the home position 160) and in the direction of arrow A, about the rotational axis 132, and such that the first section 134 (first part 130) is no longer aligned with the second magnet 152 (second part 150). This actuated movement of the first part 130 may progressively increase the biasing force of the biasing member 140. Once the actuation force is released from the first part 130, the biasing force of the biasing member 140 rotates the first part 130 about its rotational axis 132 in the opposite direction or in the direction of the arrow B, to move the first part 130 from the actuated position 170 back toward/to the home position 160. The magnetic interaction of the first section 134 (first part 130) with the second magnet 152 (second part 150) reduces an amount of overtravel of the first part 130 in returning to its home position 160 (e.g., the biasing force of the biasing member 140 may move the first part 130 to and then past its home position 160 in preceding in the direction of the arrow B, and thereafter the magnetic interaction of the first section 134 (first part 130) with the second magnet 152 (second part 150) will pull the first part 130 back to its home position 160 or in the direction of the arrow A). In various embodiments the entirety of the force exerted on the first part 130 to stop/restrain the first part 130 at its home position 160 may be provided by a magnetic interaction (e.g., between the first section 134 and the second magnet 152), and not by a mechanical stop of any type. In various embodiments the actuator 120 (if used) does not exert a "stopping force" on the first part 130 when being moved by the biasing member 140 to the home position 160 for the first part 130. In various embodiments, the home position 160 of the first part 130 is exclusively established by the magnetic interaction between the first section 134 and the second magnet 152.

It should be appreciated that the first part 130 of the actuation assembly 110 could be configured to include a first magnet, and the second part 150 of the actuation assembly 110 could be configured to a second section in accordance with the above-described first section 134.

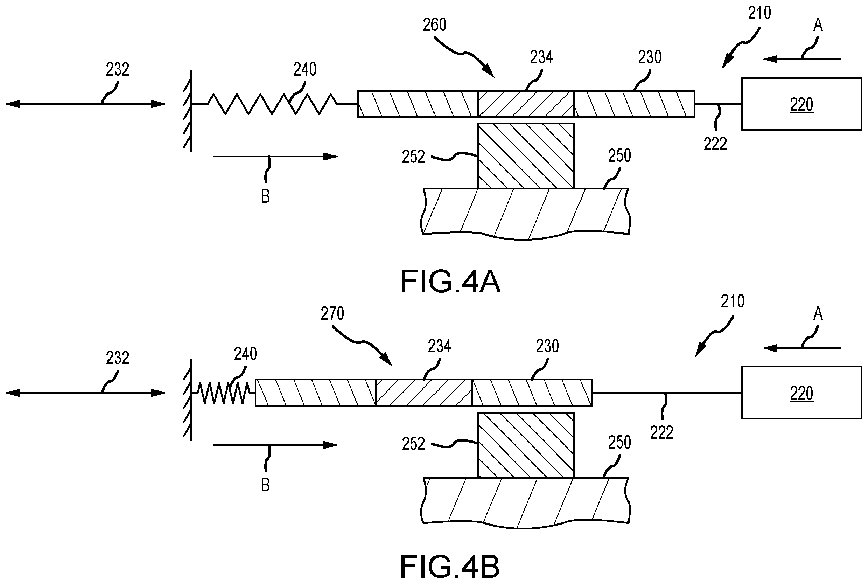

An actuation assembly is illustrated in Figures 4A and 4B and is identified by reference numeral 210. The actuation assembly 210 may include an actuator 220 (e.g., a drive or motor) that exerts an actuation force on a first part 230 to translate the first part 230 in one direction along an axis 232 (represented by arrow A in Figure 4A), from a home position 260 of the first part 230 to an actuated position 270 of the first part 230. Other ways of exerting an actuation force on the first part 230 may be utilized. A biasing member 240 (e.g., a compression spring) exerts a biasing force on this same first part 230 to translate the same first part 230 in an opposite direction along this same axis 232 and represented by arrow B in Figure 4A (an opposite direction to that provided by the noted actuation force), to move the first part 230 back toward/to its home position 260. A first section 234 is appropriately mounted/secured to the first part 230. This first section 234 may be in the form of a magnet (e.g., a permanent magnet) or a material that magnetically interacts with a magnet (e.g., the materials noted above in relation to the first section 34'). Various embodiments have the position of the first section 234 being fixed relative the first part 230. Various embodiments have an open space on each side of the home position 260 of the first part 230 (e.g. such that the first part 230 can move at least a certain distance in the direction of the arrow B, past its home position 260, without contacting a stop or the like).

Another component of the actuation assembly 210 is a second part 250. This second part 250 may be maintained in a stationary position. In any case, the first part 230 moves (e.g., axially) relative to the second part 250 (whether by the exertion of an actuation force on the first part 230 or by the biasing member 240 exerting a biasing force on the first part 230). A second magnet 252 (e.g., a permanent magnet) is appropriately mounted/secured to the second part 250. Various embodiments have the position of the second magnet 252 being fixed relative the second part 250.

Figure 4A illustrates the home position 260 for the first part 230 where the first section 234 (first part 230) is aligned with the second magnet 252 (second part 250). An actuation force may be exerted on the first part 230 to translate the first part 230 along the axis 232 from its home position 260 to an actuated position 270 (spaced from the home position 260) and in the direction of the arrow A, such that the first section 234 (first part 230) is no longer aligned with the second magnet 252 (second part 250). This actuated movement of the first part 230 may progressively increase the biasing force of the biasing member 240. Once the actuation force is released from the first part 230, the biasing force of the biasing member 240 translates the first part 230 along the axis 232 in the opposite direction and represented by the arrow B, to move the first part 230 from the actuated position 270 back toward/to the home position 260. The magnetic interaction of the first section 234 (first part 230) with the second magnet 252 (second part 250) reduces an amount of overtravel of the first part 230 in returning to its home position 260 (e.g., the biasing force of the biasing member 240 may move the first part 230 to and then past its home position 260 in the direction of the arrow B, and thereafter the magnetic interaction of the first section 234 (first part 230) with the second magnet 252 (second part 250) will pull the first part 230 back to its home position 260 or in the direction of the arrow A). In various embodiments the entirety of the force exerted on the first part 230 to stop/restrain the first part 230 at its home position 260 may be provided by a magnetic interaction (e.g., between the first section 234 and the second magnet 252), and not by a mechanical stop of any type. In various embodiments the actuator 220 (if used) does not exert a "stopping force" on the first part 230 when being moved by the biasing member 240 to the home position 260 for the first part 230. In various embodiments, the home position 260 of the first part 230 is exclusively established by the magnetic interaction between the first section 234 and the second magnet 252.

It should be appreciated that the first part 230 of the actuation assembly 210 could be configured to include a first magnet, and the second part 250 of the actuation assembly 210 could be configured to a second section in accordance with the above-described first section 234.

Actuated movement of the first parts 30, 30', 130, and 230 of the actuation assemblies 10, 10', 110, 210 may provide any appropriate function or combination of functions. Various embodiments have the noted actuation assembly being for use in conjunction with a conveyor system for the transport of product or articles of any appropriate type (e.g., aircraft cargo). The first part of the actuation assemblies 10, 10', 110, 210 may be a stop for this conveyor system when the first part is in its home position - such that the first part provides a mechanical stop for product/articles attempting to move in a first direction relative to the conveyor system (e.g., the home position may also be referred to as a stop position or a closed position for the first part). The first part of the actuation assemblies 10, 10', 110, 210 may be moved from the noted home position to the noted actuated position (e.g., the actuated position may also be referred to as an open position for the first part) to allow product/articles to move in a second direction relative to the conveyor system, including where the first and second directions are opposite of one another (e.g., along an axial path). Any appropriate actuation may be utilized. Actuation of the first part of the actuation assemblies 10, 10', 110, 210 to its actuated position may be provided actively (by a drive of any appropriate type that exerts a motive force on the first part). Actuation of the first part to its actuated position may also be provided passively (by a product/article on the conveyor system contacting and moving the first part from its home position to its actuated position when the product/article is moving in the above-noted second direction relative to the conveyor system).

The biasing member, in the case of each the actuation assemblies 10, 10', 110, 210, may move the first part to and past the home position of the first part (e.g., an overtravel situation). The magnetic field between the first part and the second part, in the case of each the actuation assemblies 10, 10', 110, 210, may be used to move the first part back to its home position (in the same direction that the first part from its home position to its actuated position). The first part could oscillate for a time about its home position in the case of each the actuation assemblies 10, 10', 110, 210, but this oscillation time should be reduced by the magnetic field and which will eventually retain the first part in a stationary state at its home position. Various embodiments have an open space on each side of the home position of the first part such that the first part does not come into contact with another structure during the noted oscillation (e.g., the home position may be characterized as being located in free space). An entirety of a stopping force exerted on the first part may be provided by the magnetic field, alone or in combination with the biasing member (e.g., the biasing member may assist in stopping the first part in the case where the first part moves past the home position (while traveling in a direction that is away from the actuated position) during the noted oscillation of the first part). An entirety of the force that is exerted on the first part to retain the first part in its home position may be provided by the magnetic field.

The foregoing description has been presented for purposes of illustration and description. Furthermore, the description is not intended to limit the invention to the form disclosed herein. Consequently, variations and modifications commensurate with the above teachings, and skill and knowledge of the relevant art, are within the scope of the present disclosure. Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An actuation assembly (10), comprising:
a first part (30);
a biasing member (40) operatively interconnected with said first part;
a second part (50);
a magnetic field between said first part (30) and said second part (50) when said first part is in a home position, wherein said first part is actuatable from said home position to an actuated position, wherein said biasing member (40) biases said first part to said home position, and wherein said magnetic field establishes said home position.

2. The actuation assembly of claim 1, wherein said first part (30) is a stop for an article on a conveyor system when said first part is in said home position, and said first part allows movement of product by the conveyor system when said first part is in said actuated position.

3. The actuation assembly of claim 1, further comprising a magnet located at said home position for said first part (30).

4. The actuation assembly of claim 3, wherein said second part (50) comprises said magnet; or
wherein said magnet is maintained in a fixed position relative to said second part (50).

5. The actuation assembly of claim 3, wherein said first part (30) comprises a first magnet (34) that moves in conjunction with said first part, and wherein said first magnet and said magnet are aligned when said first part is disposed in said home position; or
wherein said first part comprises a first section (34'), wherein said first section is aligned with said magnet when said first part is disposed in said home position, and wherein said first section comprises a material that magnetically interacts with said magnet.

6. The actuation assembly of claim 3, further comprising a magnetic material section, wherein one of said first part and said second part comprises said magnet and the other of said first part and said second part comprises said magnetic material section, and wherein said magnetic field exists between said magnet and said magnetic material section.

7. The actuation assembly of any preceding claim, wherein said actuation assembly (10) lacks a mechanical stop to establish said home position for said first part.

8. The actuation assembly of any preceding claim, wherein said home position for said first part is exclusively provided by said magnetic field.

9. A method of controlling movement of a first part, comprising:
executing a first moving comprising moving said first part from a home position to an actuated position;
removing a force used for said first moving;
exerting a biasing force on said first part;
executing a second moving after said removing, wherein said second moving moves said first part from said actuated position back to said home position using said biasing force; and
retaining said first part in said home position and comprising exerting a magnetic force on said first part that establishes said home position.

10. The method of claim 9, wherein said first part is a stop for an article on a conveyor system when said first part is in said home position, and said first part allows movement of product by the conveyor system when said first part is in said actuated position.

11. The method of claim 9, wherein said biasing force is exerted on said first part during at least part of said first moving; or
wherein said biasing force moves said first part to and past said home position, and wherein said magnetic force pulls said first part back to said home position.

12. The method of claim 9, wherein a magnitude of said biasing force progressively increases during at least part of said first moving.

13. The method of claim 9, wherein said retaining comprises disposing a magnet in a fixed position that corresponds with said home position for said first part.

14. The method of claim 13, wherein said first part comprises a first magnet that is aligned with said magnet when said first part is in said home position; or
wherein said first part comprises a magnetic material section that is aligned with said magnet when said first part is in said home position; or
wherein one of said first part and a second part comprises a magnet and the other of said first part and said second part comprises a magnetic material section, wherein said magnetic force is between said magnet and said magnetic material section, and wherein said second part is retained in a stationary position.

15. The method of claim 9, wherein said home position for said first part is exclusively provided by said magnetic force.
